# EUROPÄISCHE PATENTSCHRIFT

(11) **EP 4 141 228 B1**
(45) Veröffentlichungstag und Bekanntmachung des Hinweises auf die Patenterteilung: **12.06.2024**
(21) Anmeldenummer: 22187405.0
(22) Anmeldetag: 28.07.2022
(51) Int. Cl.: F01N 3/20

(54) **ABGASHEIZER**
EXHAUST HEATER
CHAUFFAGE DE GAZ D'ÉCHAPPEMENT

(30) Priorität: 26.08.2021 DE 102021122085
(43) Veröffentlichungstag der Anmeldung: 01.03.2023
(73) Patentinhaber: Purem GmbH, 66539 Neunkirchen (DE)
(72) Erfinder: Häberle, Jürgen, Stuttgart (DE); Spieth, Arnulf, Hochdorf (DE)
(74) Vertreter: Ruttensperger Lachnit Trossin Gomoll

(56) Entgegenhaltungen:
- EP-A1- 3 825 528
- DE-U1-202021 102 620

## Beschreibung

Die vorliegende Erfindung betrifft einen Abgasheizer, mit welchem in einer Abgasanlage eines Kraftfahrzeugs Wärme auf das darin strömende, von einer Brennkraftmaschine ausgestoßene Abgas übertragen werden kann, um dadurch insbesondere in einer Startphase des Betriebs einer Brennkraftmaschine stromabwärts bezüglich des Abgasheizers angeordnete Systembereiche, wie zum Beispiel Katalysatoren oder Partikelfilter, schneller auf Betriebstemperatur zu bringen.

Aus der nachveröffentlichten deutschen Patentanmeldung DE 10 2021 109 568 ist ein Abgasheizer bekannt, bei welchem zwischen zwei aus Blechmaterial aufgebauten, im Wesentlichen plattenartigen Trägerelementen einer Trägeranordnung zwei durch Heraustrennen aus einem Flachmaterial bereitgestellte, im Wesentlichen plattenartig bzw. flächig ausgebildete Heizleiter einer Heizleiteranordnung in einer einer Abgasheizer-Längsrichtung entsprechenden Abgas-Hauptströmungsrichtung aufeinander folgend angeordnet sind. Durch eine Verbindungsanordnung mit einer Mehrzahl von bolzenartig ausgebildeten Verbindungselementen ist der geschichtete Aufbau von Trägerelementen und dazwischen angeordneten Heizleitern zusammengehalten. Um eine elektrische Isolierung der Heizleiter bezüglich der Trägerelemente bzw. auch bezüglich einander zu erreichen, sind zwischen diesen jeweils mehrere Abstützeinheiten aus elektrisch isolierendem Material, beispielsweise Keramikmaterial, angeordnet. Der geschichtete Aufbau aus Trägerelementen, Heizleitern und dazwischen angeordneten Abstützeinheiten ist durch die Verbindungselemente der Verbindungsanordnung zusammengehalten.

Ein Abgasheizer gemäß dem Oberbegriff des Anspruchs 1 ist aus der DE 20 2021 102 620 U1 bekannt. Bei diesem Abgasheizer ist ein mit elektrisch leitendem Material aufgebauter, scheibenartiger Heizleiter in seinem Außenumfangsbereich durch eine Verbindungsanordnung an einer scheibenartig ausgebildeten Trägeranordnung getragen. Die Verbindungsanordnung umfasst zwei den Heizleiter in seinem radial äußeren Bereich zwischen sich aufnehmende und klemmende, mit elektrisch isolierendem Material aufgebaute Klemmteile. Durch eine Mehrzahl von die Klemmteile durchsetzenden Befestigungsstiften sind die Klemmteile und mit diesen der Heizleiter an der scheibenartigen Trägeranordnung festgelegt.

Es ist die Aufgabe der vorliegenden Erfindung, einen Abgasheizer bereitzustellen, bei welchem temperaturunabhängig ein stabiler Zusammenhalt der Trägeranordnung mit der Heizleiteranordnung gewährleistet ist.

Erfindungsgemäß wird diese Aufgabe gelöst durch einen Abgasheizer für eine Abgasanlage einer Brennkraftmaschine gemäß Anspruch 1, umfassend:
- eine Trägeranordnung,
- eine an der Trägeranordnung getragene Heizleiteranordnung mit wenigstens einem stromdurchflossenen Heizleiter, wobei wenigstens ein Heizleiter bezüglich der Trägeranordnung durch wenigstens eine Trägeranordnung-Abstützeinheit elektrisch isoliert getragen ist oder/und wobei wenigstens ein Heizleiter bezüglich eines weiteren Heizleiters durch wenigstens eine Heizleiter-Abstützeinheit elektrisch isoliert getragen ist,
- eine Verbindungsanordnung zur festen Verbindung der Heizleiteranordnung mit der Trägeranordnung,
- eine Längenkompensationsanordnung zur Kompensation unterschiedlicher thermischer Ausdehnungen von Abgasheizer-Komponenten.

Da die verschiedenen Komponenten eines derartigen Abgasheizers, also insbesondere die Trägeranordnung, die Heizleiteranordnung sowie die diese bezüglich einander abstützenden Abstützeinheiten und auch die den festen Zusammenhalt bereitstellende Verbindungsanordnung, im Allgemeinen aus unterschiedlichen Materialien aufgebaut sind, erfahren diese bei Erwärmung durch einen derartigen Abgasheizer durchströmendes Abgas unterschiedliche thermisch induzierten Ausdehnungen. Bei niedrigeren Temperaturen stellen die durch die Verbindungsanordnung verspannt gegeneinander gehaltenen Komponenten Trägeranordnung, Heizleiteranordnung und Abstützeinheiten einen stabilen Verbund bereit. Dehnt sich beispielsweise die Verbindungsanordnung bei Erwärmung durch einen Abgasheizer durchströmendes Abgas stärker aus, als die durch diese zusammengehaltenen Komponenten des Abgasheizers, kann die Verspannung verlorengehen und es können zu Beschädigungen oder/und Geräuschen führende Relativbewegungen der dann in zumindest geringem Ausmaß bezüglich einander bewegbaren Komponenten des Abgasheizers entstehen. Bei dem erfindungsgemäßen Aufbau wird dies dadurch vermieden, dass die Längenkompensationsanordnung derartige unterschiedliche Wärmeausdehnungen verschiedener Komponenten des Abgasheizers derart kompensiert, dass, unabhängig von der Temperatur der Komponenten des Abgasheizers, diese durch die Verbindungsanordnung stabil zusammengehalten sind.

Für einen einfach zu realisierenden Aufbau umfasst die Verbindungsanordnung wenigstens ein vorzugsweise bolzenartiges Verbindungselement, und die Längenkompensationsanordnung umfasst wenigstens ein Längenkompensationselement im Verbindungskraftübertragungsweg zwischen wenigstens einem Verbindungselement und der Trägeranordnung oder/und der Heizleiteranordnung.

Die Trägeranordnung kann zwei in Richtung einer Abgasheizer-Längsachse aufeinanderfolgende und die Heizleiteranordnung zwischen sich aufnehmende Trägerelemente umfassen. Um bei einem derartigen geschichteten Aufbau die Längenkompensationswirkung zuverlässig bereitstellen zu können, wird vorgeschlagen, dass die Längenkompensationsanordnung in Zuordnung zu wenigstens einem, vorzugsweise jedem Verbindungselement wenigstens ein Längenkompensationselement im Abstützweg zwischen wenigstens einem der Trägerelemente und der Heizleiteranordnung oder/und im Abstützweg zwischen zwei Heizleitern der Heizleiteranordnung oder/und im Abstützweg zwischen wenigstens einem Trägerelement und wenigstens einem Verbindungselement umfasst.

Dazu kann beispielsweise vorgesehen sein, dass wenigstens ein, vorzugsweise jedes Längenkompensationselement zwischen einem Trägerelement und einer Trägerelement-Abstützeinheit angeordnet ist, oder/und dass wenigstens ein, vorzugsweise jedes Längenkompensationselement zwischen zwei Heizleitern angeordnet ist, oder/und dass wenigstens ein, vorzugsweise jedes Längenkompensationselement zwischen einem Trägerelement und einem an dem Trägerelement sich abstützenden Abstützbereich eines Verbindungselements angeordnet ist.

Um eine definierte Positionierung der Längenkompensationsanordnung in dem Abgasheizer zu gewährleisten, wird vorgeschlagen, dass wenigstens ein, vorzugsweise jedes Verbindungselement wenigstens ein Längenkompensationselement durchsetzt und wenigstens eine Trägerelement-Abstützeinheit oder/und wenigstens eine Heizleiter-Abstützeinheit durchsetzt. Es wird somit in Zuordnung zu wenigstens einem Verbindungselement ein durch dieses zusammengehaltener Stapel aus einer oder mehreren Abstützeinheiten und einem oder mehreren Längenkompensationselementen bereitgestellt.

Zur Bereitstellung der Längenkompensationsfunktion kann wenigstens ein, vorzugsweise jedes Längenkompensationselement mit einem Material mit größerem Wärmeausdehnungskoeffizienten als das Material des wenigstens einen Verbindungselements aufgebaut sein. Somit ist gewährleistet, dass ein derartiges Längenkompensationselement bei Erwärmung sich stärker ausdehnt, als das bzw. die Verbindungselemente, so dass auch bei Erwärmung eine durch die Verbindungselemente generierte Verspannung der verschiedenen Komponenten des Abgasheizers aufrecht erhalten bleibt.

Beispielweise kann dann, wenn das wenigstens eine Verbindungselement mit Nickel-Chrom-Legierung-Material aufgebaut ist, das wenigstens eine Längenkompensationselement mit Stahl-Material, vorzugsweise 1.4980-Stahl, aufgebaut sein.

Bei einer weiteren Ausgestaltung kann die Längenkompensationsfunktion dadurch erreicht werden, dass wenigstens ein, vorzugsweise jedes Längenkompensationselement ein elastisch verformbares Vorspannelement umfasst.

Beispielsweise kann wenigstens ein, vorzugsweise jedes Längenkompensationselement als Tellerfeder oder Wellfeder ausgebildet sein.

Für einen mechanisch stabilen und gegen Abgas resistenten Aufbau kann die Trägeranordnung mit Metall-Material aufgebaut sein. Auch die Heizleiteranordnung kann mit Metall-Material aufgebaut sein, insbesondere mit einem Metall-Material, welches bei Anlegen einer elektrischen Spannung aufgrund des elektrischen Widerstandes desselben erwärmt wird.

Die Erfindung betrifft ferner eine Abgasanlage für eine Brennkraftmaschine, umfassend wenigstens einen erfindungsgemäß aufgebauten Abgasheizer.

Die vorliegende Erfindung wird nachfolgend mit Bezug auf die beiliegenden Figuren detailliert beschrieben. Es zeigt:
- Fig. 1: eine perspektivische Ansicht eines Abgasheizers;
- Fig. 2: eine Längsschnittansicht des Abgasheizers der Fig. 1;
- Fig. 3: in einen Längsschnitt eines Abgasheizers mit in Zuordnung zu einem Verbindungselement angeordneten Trägeranordnung-Abstützeinheiten und einem Längenkompensationselement einer Längenkompensationsanordnung in prinzipartiger Darstellung;
- Fig. 4: eine der Fig. 3 entsprechende Darstellung einer alternativen Ausgestaltungsart;
- Fig. 5: eine weitere der Fig. 3 entsprechende Darstellung einer alternativen Ausgestaltungsart.

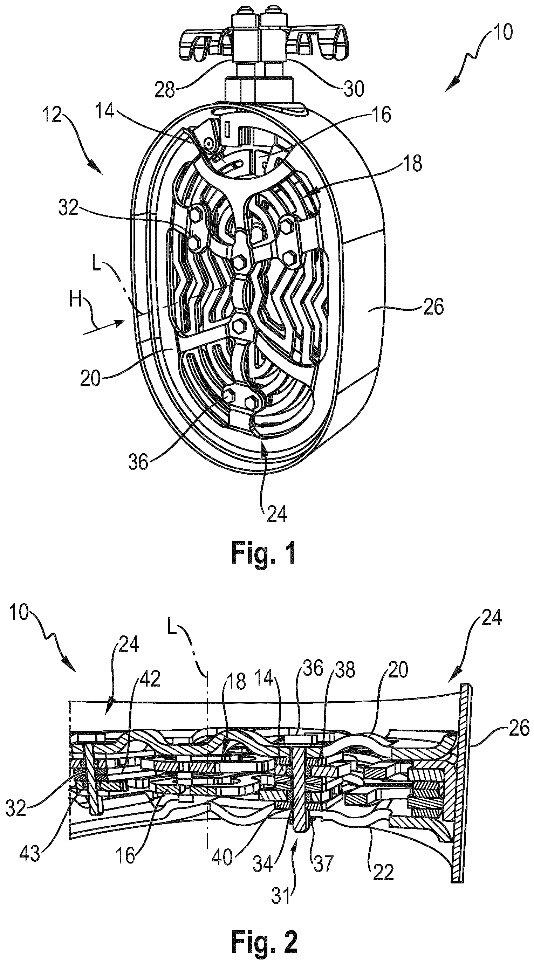

In den Fig. 1 und 2 ist ein Abgasheizer 10 für eine Abgasanlage 12 einer Brennkraftmaschine, beispielsweise an einem Kraftfahrzeug, dargestellt. Der Abgasheizer 10 ist in der Abgasanlage 12 von Abgas in einer Abgas-Hauptströmungsrichtung H durchströmbar und weist zwei in Richtung einer Abgasheizer-Längsachse L aufeinander folgend angeordnete und somit von im Wesentlichen in der Abgas-Hauptströmungsrichtung H strömendem Abgas nacheinander umströmbare Heizleiter 14, 16 einer allgemein mit 18 bezeichneten Heizleiteranordnung auf. Die Heizleiter 14, 16 sind im Wesentlichen plattenartig bzw. aus Flachmaterial aufgebaut und können mit ihrer mit einer Mehrzahl von in mäanderartiger Struktur verlaufenden Abschnitten bereitgestellten Struktur durch Heraustrennen aus einem Flachmaterialrohling, insbesondere einem Metallrohling, erzeugt werden.

An den in Richtung der Abgasheizer-Längsachse L voneinander abgewandt liegenden Seiten der beiden Heizleiter 14, 16 sind im Wesentlichen plattenartig gestaltete Trägerelemente 20, 22 einer allgemein mit 24 bezeichneten Trägeranordnung vorgesehen. An ihrem Außenumfangsbereich sind die plattenartigen Trägerelemente 20, 22 an einem im Wesentlichen zylindrischen Trägergehäuse 26 festgelegt.

Die beiden Heizleiter 14, 16 können zueinander seriell oder parallel geschaltet sein. Zur elektrischen Verbindung mit einer Spannungsquelle sind zwei das Trägergehäuse 26 durchsetzende Anschlusseinheiten 28, 30 vorgesehen, welche in dem von dem Trägergehäuse 26 umgebenen Innenraum mit den Heizleitern 14, 16 elektrisch leitend verbunden sind.

Zum Erhalt eines stabilen Verbundes sind die beiden Trägerelemente 20, 22 und die dazwischen angeordneten, einander unmittelbar benachbart liegenden Heizleiter 14, 16 durch eine Verbindungsanordnung 31 mit einer Mehrzahl bolzenartig ausgebildeter Verbindungselementen 32 fest miteinander verbunden. Die Verbindungselemente 32 können beispielsweise als Schraubbolzen mit einem Schaft 34 und einem Kopf 36 ausgebildet sein. Auf den Schaft 34 kann beispielsweise ein Mutterelement 37 aufgeschraubt sein, um den geschichteten Aufbau aus Trägerelementen 20, 22 und Heizleitern 14, 16 zwischen dem Kopf 36 und dem Mutterelement 37 einzuspannen.

Um eine elektrische Isolierung der Heizleiter 14, 16 bezüglich der im Allgemeinen aus Metallmaterial aufgebauten Trägerelemente 20, 22 der Trägeranordnung 24 zu erreichen, ist zwischen dem Heizleiterelement 14 und dem Trägerelement 20 beispielsweise in Zuordnung zu jedem Verbindungselement 32 eine mit elektrisch isolierendem Material, beispielsweise Keramikmaterial, aufgebaute, im Wesentlichen plattenartig ausgebildete und von dem zugeordneten Verbindungselement 32 im Bereich einer darin vorgesehenen Öffnung durchsetzte Trägeranordnung-Abstützeinheit 38 vorgesehen. Gleichmaßen ist beispielsweise in Zuordnung zu jedem Verbindungselement 32 eine zwischen dem Heizleiter 16 und dem Trägerelement 22 angeordnete Trägerelement-Abstützeinheit 40 vorgesehen. Die Trägerelement-Abstützeinheiten 38, 40 können beispielweise zueinander im Wesentlichen baugleich sein.

Um die beiden nebeneinander liegenden Heizleiter 14, 16 bezüglich einander elektrisch isoliert abzustützen, ist beispielsweise in Zuordnung zu jedem Verbindungselement 32 eine Heizleiter-Abstützeinheit 42 vorgesehen. Auch jede Heizleiter-Abstützeinheit 42 ist im Wesentlichen plattenartig mit einer oder mehreren Scheiben ausgebildet und mit Keramikmaterial aufgebaut. Dort, wo die Heizleiter 14, 16 von dem Verbindungselement 32 durchsetzt sind, können in die in den Heizleitern 14, 16 gebildeten Öffnungen hülsenartige Isolierelemente 43 eingesetzt werden, um eine definierte Positionierung des Verbindungselements 32 in den in den Heizleitern 14, 16 vorgesehenen Öffnungen zu erreichen.

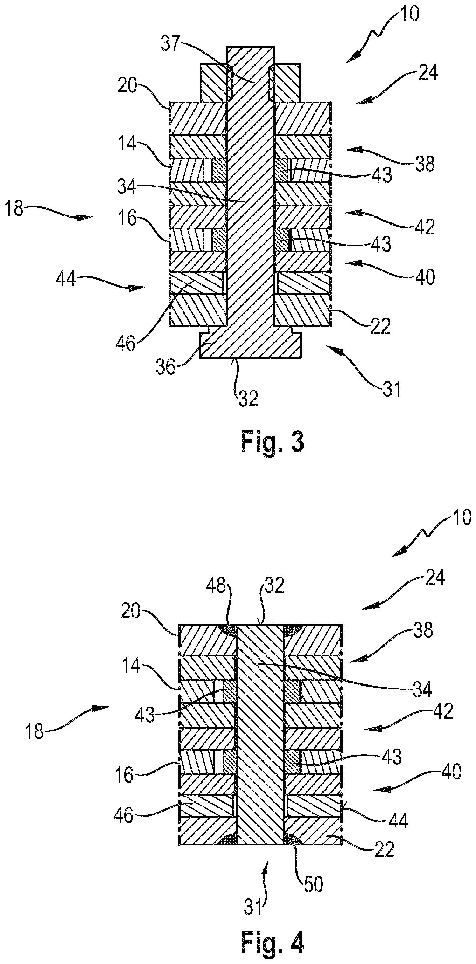

Die Fig. 3 zeigt im Zusammenhang mit einem Verbindungselement 32 den Aufbau eines Abgasheizers 10, bei welchem durch Bereitstellen einer allgemein mit 44 bezeichneten Längenkompensationsanordnung unterschiedliche thermische Ausdehnungen der verschiedenen Komponenten des Abgasheizers 10 kompensiert werden. Dabei ist zu berücksichtigen, dass in dem geschichteten Aufbau aus den beiden Trägerelementen 20, 22 und den Heizleitern 14, 16 sowie auch den dazwischen angeordneten Trägerelement-Abstützeinheiten 38, 40 bzw. der Heizleiter-Abstützeinheiten 42 diese verschiedenen Komponenten zueinander unterschiedliche Aufbaumaterialien aufweisen, insbesondere andere Aufbaumaterialien als das bzw. jedes Verbindungselements 32 aufweisen. Derartige unterschiedliche Aufbaumaterialien haben im Allgemeinen unterschiedliche Wärmeausdehnungskoeffizienten, was zur Folge haben kann, dass bei Erwärmung durch den Abgasheizer 10 durchströmendes Abgas unterschiedliche thermisch induzierte Ausdehnungen zu einem Verlust der durch die Verbindungselemente 32 im Kaltzustand aufgebauten Verspannung führen. Die zwischen dem Kopf 36 und dem Mutterelement 37, welche jeweils einen Abstützbereich eines Verbindungselements 32 bereitstellen, gehaltenen Komponenten des Abgasheizers 10 können dann in einen Zustand gelangen, in welchem diese ein Bewegungsspiel in Richtung der Abgasheizer-Längsachse L zueinander aufweisen.

Derartige unterschiedliche thermische Ausdehnungen werden durch die Längenkompensationsanordnung 44 so kompensiert, dass auch bei erwärmtem Abgasheizer 10 die durch die Verbindungselemente 32 zusammengehaltenen Komponenten des Abgasheizers 10 unter Verspannung stabil gegeneinander gehalten sind. Um dies zu erreichen, umfasst die Längenkompensationsanordnung 44 beispielsweise in Zuordnung zu jedem Verbindungselement 32 ein scheibenartig bzw. ringscheibenartig ausgebildetes Längenkompensationselement 46. Dieses kann, ebenso wie die verschiedenen Abstützeinheiten 38, 40, 42, von dem zugeordneten Verbindungselement 32 bzw. dessen Schaft 34 durchsetzt sein, so dass ein auch quer zur Abgasheizer-Längsachse L stabil zusammengehaltener Stapel aus Abstützeinheiten 38, 40, 42 und einem Längenkompensationselement 46 erzeugt ist.

Im dargestellten Ausgestaltungsbeispiel ist das dem dargestellten Verbindungselement 32 zugeordnete Längenkompensationselement 46 zwischen dem vom Kopf 36 des Verbindungselements 32 beaufschlagten und diesen somit abstützenden Trägerelement 22 und der diesem benachbarten Trägerelement-Abstützeinheit 40 angeordnet. Das Längenkompensationselement 46 ist mit einem Material aufgebaut, welches einen größeren Wärmeausdehnungskoeffizienten aufweist als das Aufbaumaterial des Verbindungselements 32. Dehnt sich das Verbindungselement 32 bei Erwärmung in Richtung der Abgasheizer-Längsachse L aus, dehnt sich auch das Längenkompensationselement 46 in dieser Richtung aus, und zwar in größerem Ausmaß als das Verbindungselement 32. Dabei ist auch berücksichtigt, dass das Verbindungselement 32 in Richtung der Abgasheizer-Längsachse L eine deutlich größere Erstreckungslänge aufweist, als das Längenkompensationselement 46. Da die thermisch induzierte relative Längenänderung des Verbindungselements 32 aufgrund dessen vergleichsweise großer Erstreckungslänge in der Abgasheizer-Längsrichtung L zu einer vergleichsweise großen absoluten Längenänderung führt, ist das Längenkompensationselement 46 mit einem Material aufgebaut, dessen relative Längenänderung bei Erwärmung so groß ist, dass trotz der kürzeren Erstreckungslänge des Längenkompensationselements 46 in Richtung der Abgasheizer-Längsachse L die absolute Längenänderung des Längenkompensationselements 46 zumindest die absolute Längenänderung des Verbindungselements 32 kompensiert. Dabei ist auch berücksichtigt, dass auch die anderen zwischen den beiden Trägerelementen 20, 22 angeordneten Komponenten des Abgasheizers 10, also die verschiedenen Abstützeinheiten 38, 40, 42 sowie auch die Heizleiter 14, 16, und auch die Trägerelemente 20, 22 selbst aufgrund ihrer Erwärmung eine zumindest geringfügige Zunahme ihrer Erstreckungslänge in Richtung der Abgasheizer-Längsachse L erfahren und daher bereits dadurch ein Teil der Längenänderung des Verbindungselements 32 kompensiert wird. Nur der durch die Längenänderung dieser Komponenten nicht kompensierte Teil der absoluten Längenänderung des Verbindungselements 32 muss durch die Längenänderung des Längenkompensationselements 46 kompensiert werden.

Wenn beispielsweise bei dem in Fig. 3 dargestellten Aufbau die beiden Trägerelemente 20, 22 mit Stahlblechmaterial aufgebaut sind, die Heizleiter 14, 16 mit bei Anlegen einer Spannung aufgrund ihres elektrischen Widerstandes erwärmbarem Metall-Material aufgebaut sind, die verschiedenen Abstützeinheiten 38, 40, 42 mit Keramik-Material aufgebaut sind und das Verbindungselement 32 mit Metall-Material, wie z. B. Nickel-Chrom-Legierung-Material, aufgebaut ist, kann das Längenkompensationselement 46 mit Stahl-Material, beispielsweise 1.4980-Stahl, aufgebaut sein, um die angestrebte Kompensation der Längenänderung des Verbindungselements 32 zu erreichen.

Es ist darauf hinzuweisen, dass vorzugsweise in Zuordnung zu jedem der Verbindungselemente 32 des Abgasheizers 10 die Längenkompensationsanordnung 44 ein derartiges Längenkompensationselement 46 aufweist. Weiter ist darauf hinzuweisen, dass ein derartiges Längenkompensationselement 46 auch an anderer Stelle angeordnet sein könnte. Beispielsweise könnte dieses auch zwischen dem Trägerelement 20 und der Trägerelement-Abstützeinheit 38 angeordnet sein oder zwischen einer der Trägerelement-Abstützeinheiten 38, 40 und dem jeweils dazu unmittelbar benachbarten Heizleiter 14 bzw. 16. Auch könnte ein Längenkompensationselement 46 zwischen den beiden Heizleitern 14, 16, beispielsweise zwischen der Heizleiter-Abstützeinheit 42 und einem der Heizleiter 14, 16, positioniert sein oder zwischen zwei scheibenartigen Teilen der Heizleiter-Abstützeinheit 42.

Abhängig davon, in welchem Ausmaß eine thermisch induzierte Längenänderung insbesondere des Verbindungselements 32 zu kompensieren ist, ist es auch möglich, in dem gestapelten Verbund mehrere Längenkompensationselemente 46 beispielsweise an den vorangehend angeführten Positionen vorzusehen.

Eine alternative Ausgestaltungsart ist in Fig. 4 dargestellt. Diese unterscheidet sich von dem vorangehend beschriebenen Aufbau im Wesentlichen dadurch, dass das bolzenartig aufgebaute Verbindungselement 32 mit den beiden Trägerelementen 20, 22 an seinen axialen Endbereichen jeweils durch eine Verschweißung 48, 50 materialschlüssig und somit fest verbunden ist. Bei diesem Aufbau kann der Stapel aus Trägerelementen 20, 22, Heizleitern 14, 16 und Abstützeinheiten 38, 40, 42 beim Zusammenbau gegeneinander verspannt gehalten werden und in diesem Zustand das Verbindungselement 32 in seinen beiden axialen Endbereichen mit den Trägerelementen 20, 22 durch die Verschweißungen 48, 50 fest verbunden werden. Auch dabei ist eine Längenkompensationsanordnung 44 mit zumindest einem Längenkompensationselement 46 in Zuordnung zu vorzugsweise jedem Verbindungselement 32 vorgesehen.

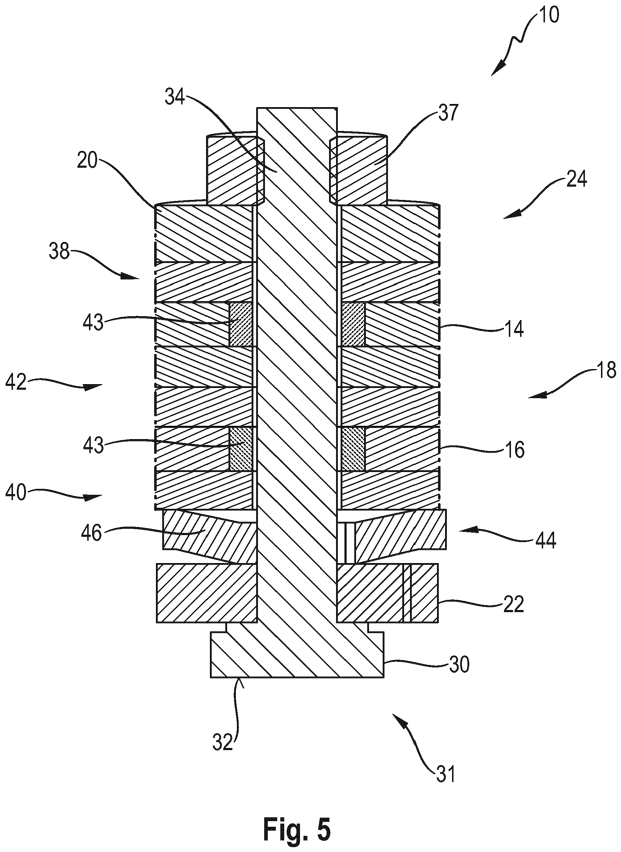

Eine weitere alternative Ausgestaltungsart ist in Fig. 5 dargestellt. Bei diesem Aufbau ist das in Zuordnung zu dem beispielsweise als Schraubbolzen ausgebildeten Verbindungselement 32 vorgesehene Längenkompensationselement 46 als elastisch verformbares Vorspannelement, insbesondere als Tellerfeder, ausgebildet. Das Längenkompensationselement 46 hält aufgrund seiner axialen Vorspannung auch bei thermisch induzierter Längenänderung des Verbindungselements 32 die aufeinander gestapelten Komponenten des Abgasheizers 10, also die beiden Trägerelemente 20, 22, die Heizleiter 14, 16 und die dazwischen angeordneten Abstützeinheiten 38, 40, 42, unter Vorspannung gegeneinander. Insbesondere bei Ausgestaltung als mit Metall-Material aufgebaute Tellerfeder oder Wellfeder gewährleistet ein derartiges Längenkompensationselement 46, dass die von diesem generierte Vorspannkraft in dem Temperaturbereich, in welchem ein Abgasheizer 10 Temperaturänderungen erfahren wird, zuverlässig beibehalten bleibt.

Es ist abschließend darauf hinzuweisen, dass die vorangehend beschriebenen Ausgestaltungen einer Längenkompensationsanordnung in verschiedensten Aspekten variiert werden können. Wie bereits angesprochen, können in Zuordnung zu einem oder mehreren Verbindungselementen auch mehrere Längenkompensationselemente an verschiedenen axialen Positionen angeordnet sein. Alternativ oder zusätzlich könnte ein Längenkompensationselement auch an der von den Heizleitern abgewandten Außenseite von einem oder von beiden Trägerelementen 20 angeordnet werden, so dass dieses zwischen einem jeweiligen Trägerelement 20, 22 und einem Abstützbereich des Verbindungselements, also z.B. dem Kopf 36 oder dem Mutterelement 37, angeordnet ist. Auch bei derartiger Ausgestaltung kann das Längenkompensationselement 46 entweder als eine Vorspannkraft erzeugendes, elastisch verformbares Vorspannelement, also beispielsweise als Tellerfeder oder Wellfeder, ausgebildet sein, oder kann mit einem Material aufgebaut sein, welches aufgrund seines größeren Wärmeausdehnungskoeffizienten die vergleichsweise große absolute Längenänderung des Verbindungselements 32 kompensiert.

## Patentansprüche

1. Abgasheizer für eine Abgasanlage einer Brennkraftmaschine, umfassend:
- eine Trägeranordnung (24),
- eine an der Trägeranordnung (24) getragene Heizleiteranordnung (18) mit wenigstens einem stromdurchflossenen Heizleiter (14, 16), wobei wenigstens ein Heizleiter (14, 16) bezüglich der Trägeranordnung (24) durch wenigstens eine Trägeranordnung-Abstützeinheit (38, 40) elektrisch isoliert getragen ist oder/und wobei wenigstens ein Heizleiter (14) bezüglich eines weiteren Heizleiters (16) durch wenigstens eine Heizleiter-Abstützeinheit (42) elektrisch isoliert getragen ist,
- eine Verbindungsanordnung (31) zur festen Verbindung der Heizleiteranordnung (18) mit der Trägeranordnung (24), wobei die Verbindungsanordnung (31) wenigstens ein Verbindungselement (32) umfasst,
**gekennzeichnet durch** eine Längenkompensationsanordnung (44) zur Kompensation unterschiedlicher thermischer Ausdehnungen von Abgasheizer-Komponenten, wobei die Längenkompensationsanordnung (44) wenigstens ein Längenkompensationselement (46) im Verbindungskraftübertragungsweg zwischen wenigstens einem Verbindungselement (32) und der Trägeranordnung (24) oder/und der Heizleiteranordnung (18) umfasst.

2. Abgasheizer nach Anspruch 1, **dadurch gekennzeichnet, dass** die Verbindungsanordnung (31) wenigstens ein bolzenartiges Verbindungselement (32) umfasst.

3. Abgasheizer nach Anspruch 1 oder 2, **dadurch gekennzeichnet, dass** die Trägeranordnung (24) zwei in Richtung einer Abgasheizer-Längsachse (L) aufeinanderfolgende und die Heizleiteranordnung (18) zwischen sich aufnehmende Trägerelemente (20, 22) umfasst, und dass die Längenkompensationsanordnung (44) in Zuordnung zu wenigstens einem, vorzugsweise jedem Verbindungselement (32) wenigstens ein Längenkompensationselement (46) im Abstützweg zwischen wenigstens einem der Trägerelemente (20, 22) und der Heizleiteranordnung (18) oder/und im Abstützweg zwischen zwei Heizleitern (14, 16) der Heizleiteranordnung (18) oder/und im Abstützweg zwischen wenigstens einem Trägerelement (20, 22) und wenigstens einem Verbindungselement (32) umfasst.

4. Abgasheizer nach Anspruch 3, **dadurch gekennzeichnet, dass** wenigstens ein, vorzugsweise jedes Längenkompensationselement (46) zwischen einem Trägerelement (20, 22) und einer Trägerelement-Abstützeinheit (38, 40) angeordnet ist, oder/und dass wenigstens ein, vorzugsweise jedes Längenkompensationselement (46) zwischen zwei Heizleitern (14,16) angeordnet ist, oder/und dass wenigstens ein, vorzugsweise jedes Längenkompensationselement (46) zwischen einem Trägerelement (20, 22) und einem an dem Trägerelement (20, 22) sich abstützenden Verbindungselement-Abstützbereich eines Verbindungselements (32) angeordnet ist.

5. Abgasheizer nach einem der Ansprüche 1-4, **dadurch gekennzeichnet, dass** wenigstens ein, vorzugsweise jedes Verbindungselement (32) wenigstens ein Längenkompensationselement (46) durchsetzt und wenigstens eine Trägerelement-Abstützeinheit (38, 40) oder/und wenigstens eine Heizleiter-Abstützeinheit (42) durchsetzt.

6. Abgasheizer nach einem der Ansprüche 1-5, **dadurch gekennzeichnet, dass** wenigstens ein, vorzugsweise jedes Längenkompensationselement (46) mit einem Material mit größerem Wärmeausdehnungskoeffizienten als das Material des wenigstens einen Verbindungselements (32) aufgebaut ist.

7. Abgasheizer nach Anspruch 6, **dadurch gekennzeichnet, dass** das wenigstens eine Verbindungselement (32) mit Nickel-Chrom-Legierung-Material aufgebaut ist, und dass das wenigstens eine Längenkompensationselement (46) mit Stahl-Material, vorzugsweise 1.4980-Stahl, aufgebaut ist.

8. Abgasheizer nach einem der Ansprüche 1-7, **dadurch gekennzeichnet, dass** wenigstens ein, vorzugsweise jedes Längenkompensationselement (46) ein elastisch verformbares Vorspannelement umfasst.

9. Abgasheizer nach Anspruch 8, **dadurch gekennzeichnet, dass** wenigstens ein, vorzugsweise jedes Längenkompensationselement (46) als Tellerfeder oder Wellfeder ausgebildet ist.

10. Abgasheizer nach einem der Ansprüche 1-9, **dadurch gekennzeichnet, dass** die Trägeranordnung (24) mit Metall-Material aufgebaut ist, oder/und das die Heizleiteranordnung (18) mit Metall-Material aufgebaut ist.

11. Abgasanlage für eine Brennkraftmaschine, umfassend wenigstens einen Abgasheizer (10) nach einem der Ansprüche 1-10.

## Claims

1. An exhaust gas heater for an exhaust gas system of an internal combustion engine, comprising:
- a carrier arrangement (24),
- a heating-conductor arrangement (18), carried on the carrier arrangement (24) and having at least one heating conductor (14, 16) through which a current flows, wherein at least one heating conductor (14, 16) is carried in an electrically insulated manner with respect to the carrier arrangement (24) by at least one carrier-arrangement supporting unit (38, 40) and/or wherein at least one heating conductor (14) is carried in an electrically insulated manner with respect to a further heating conductor (16) by at least one heating-conductor supporting unit (42),
- a connecting arrangement (31) for securely connecting the heating-conductor arrangement (18) to the carrier arrangement (24), wherein the connecting arrangement (31) comprises at least one connecting element (32),
**characterized by** a length-compensating arrangement (44) for compensating for different thermal expansions of components of the exhaust gas heater, wherein the length-compensating arrangement (44) comprises at least one length-compensating element (46) in the connecting-force transmission path between at least one connecting element (32) and the carrier arrangement (24) and/or the heating-conductor arrangement (18).

2. The exhaust gas heater as claimed in claim 1, **characterized in that** the connecting arrangement (31) comprises at least one preferably bolt-like connecting element (32).

3. The exhaust gas heater as claimed in claim 1 or 2, **characterized in that** the carrier arrangement (24) comprises two carrier elements (20, 22), following one another in the direction of a longitudinal axis (L) of the exhaust gas heater and receiving the heating-conductor arrangement (18) between them, and **in that** the length-compensating arrangement (44) comprises, in assignment to at least one, preferably each connecting element (32), at least one length-compensating element (46) in the supporting path between at least one of the carrier elements (20, 22) and the heating-conductor arrangement (18) and/or in the supporting path between two heating conductors (14, 16) of the heating-conductor arrangement (18) and/or in the supporting path between at least one carrier element (20, 22) and at least one connecting element (32).

4. The exhaust gas heater as claimed in claim 3, **characterized in that** at least one, preferably each length-compensating element (46) is arranged between a carrier element (20, 22) and a carrier-element supporting unit (38, 40), and/or **in that** at least one, preferably each length-compensating element (46) is arranged between two heating conductors (14, 16), and/or **in that** at least one, preferably each length-compensating element (46) is arranged between a carrier element (20, 22) and a connecting-element supporting region of a connecting element (32) supporting itself on the carrier element (20, 22).

5. The exhaust gas heater as claimed in one of claims 1-4, **characterized in that** at least one, preferably each connecting element (32) passes through at least one length-compensating element (46) and passes through at least one carrier-element supporting unit (38, 40) and/or at least one heating-conductor supporting unit (42).

6. The exhaust gas heater as claimed in one of claims 1-5, **characterized in that** at least one, preferably each length-compensating element (46) is constructed from a material with a greater coefficient of thermal expansion than the material of the at least one connecting element (32).

7. The exhaust gas heater as claimed in claim 6, **characterized in that** the at least one connecting element (32) is constructed from a nickel-chromium alloy material, and **in that** the at least one length-compensating element (46) is constructed from a steel material, preferably 1.4980 steel.

8. The exhaust gas heater as claimed in one of claims 1-7, **characterized in that** at least one, preferably each length-compensating element (46) comprises an elastically deformable prestressing element.

9. The exhaust gas heater as claimed in claim 8, **characterized in that** at least one, preferably each length-compensating element (46) is formed as a plate spring or corrugated spring.

10. The exhaust gas heater as claimed in one of claims 1-9, **characterized in that** the carrier arrangement (24) is constructed from a metal material, and/or **in that** the heating-conductor arrangement (18) is constructed from a metal material.

11. An exhaust gas system for an internal combustion engine, comprising at least one exhaust gas heater (10) as claimed in one of claims 1-10.

## Revendications

1. Chauffage des gaz d'échappement pour un système de gaz d'échappement d'un moteur à combustion interne, comprenant :
- un dispositif de support (24),
- un dispositif de conducteur de chauffage (18), supporté par le dispositif de support (24) et comportant au moins un conducteur de chauffage (14, 16) traversé par un courant, dans lequel au moins un conducteur de chauffage (14, 16) est supporté de manière électriquement isolée par rapport au dispositif de support (24) par au moins une unité de support de dispositif porteur (38, 40) et/ou dans lequel au moins un conducteur de chauffage (14) est supporté de manière électriquement isolée par rapport à un autre conducteur de chauffage (16) par au moins une unité de support de conducteur de chauffage (42),
- un dispositif de connexion (31) pour connecter solidement le dispositif de conducteur de chauffage (18) au dispositif de support (24), dans lequel le dispositif de connexion (31) comprend au moins un élément de connexion (32),
**caractérisé par** un dispositif de compensation de longueur (44) pour compenser les différentes dilatations thermiques des composants du dispositif de chauffage des gaz d'échappement, dans lequel le dispositif de compensation de longueur (44) comprend au moins un élément de compensation de longueur (46) dans le chemin de transmission de la force de connexion entre au moins un élément de connexion (32) et le dispositif de support (24) et/ou le dispositif de conducteur de chauffage (18).

2. Chauffage des gaz d'échappement selon la revendication 1, **caractérisé en ce que** le dispositif de connexion (31) comprend au moins un élément de connexion (32) de préférence en forme de boulon.

3. Chauffage des gaz d'échappement selon la revendication 1 ou 2, **caractérisé en ce que** le dispositif de support (24) comprend deux éléments porteurs (20, 22), se suivant dans la direction d'un axe longitudinal (L) du dispositif de chauffage des gaz d'échappement et recevant le dispositif de conducteur de chauffage (18) entre eux, et **en ce que** le dispositif de compensation de longueur (44) comprend, en association à au moins un, de préférence chaque élément de connexion (32), au moins un élément de compensation de longueur (46) dans le chemin de support entre au moins un des éléments porteurs (20, 22) et le dispositif de conducteur de chauffage (18) et/ou dans le chemin de support entre deux conducteurs de chauffage (14, 16) du dispositif de conducteur de chauffage (18) et/ou dans le chemin de support entre au moins un élément porteur (20, 22) et au moins un élément de connexion (32).

4. Chauffage des gaz d'échappement selon la revendication 3, **caractérisé en ce que** au moins un, de préférence chaque élément de compensation de longueur (46) est disposé entre un élément porteur (20, 22) et une unité de support de dispositif porteur (38, 40), et/ou **en ce que** au moins un, de préférence chaque élément de compensation de longueur (46) est disposé entre deux conducteurs de chauffage (14, 16), et/ou **en ce que** au moins un, de préférence chaque élément de compensation de longueur (46) est disposé entre un élément porteur (20, 22) et une zone de support d'élément de connexion d'un élément de connexion (32) se supportant lui-même sur l'élément porteur (20, 22).

5. Chauffage des gaz d'échappement selon l'une des revendications 1 à 4, **caractérisé en ce que** au moins un, de préférence chaque élément de connexion (32) traverse au moins un élément de compensation de longueur (46) et traverse au moins une unité de support de dispositif porteur (38, 40) et/ou au moins une unité de support de conducteur de chauffage (42).

6. Chauffage des gaz d'échappement selon l'une des revendications 1 à 5, **caractérisé en ce que** au moins un, de préférence chaque élément de compensation de longueur (46) est construit à partir d'un matériau ayant un coefficient de dilatation thermique supérieur à celui du matériau dudit au moins un élément de connexion (32).

7. Chauffage des gaz d'échappement selon la revendication 6, **caractérisé en ce que** ledit au moins un élément de connexion (32) est fabriqué à partir d'un alliage nickel-chrome, et **en ce que** ledit au moins un élément de compensation de longueur (46) est fabriqué à partir d'un matériau en acier, de préférence en acier 1.4980.

8. Chauffage des gaz d'échappement selon l'une des revendications 1 à 7, **caractérisé en ce que** au moins un, de préférence chaque élément de compensation de longueur (46) comprend un élément de précontrainte élastiquement déformable.

9. Chauffage des gaz d'échappement selon la revendication 8, **caractérisé en ce que** au moins un, de préférence chaque élément de compensation de longueur (46) est formé comme un ressort à plaques ou un ressort ondulé.

10. Chauffage des gaz d'échappement selon l'une des revendications 1 à 9, **caractérisé en ce que** le dispositif de support (24) est construit en métal, et/ou **en ce que** le dispositif de conducteur de chauffage (18) est construit en métal.

11. Système de gaz d'échappement pour un moteur à combustion interne, comprenant au moins un réchauffeur de gaz d'échappement (10) selon l'une des revendications 1 à 10.
